# EUROPEAN PATENT SPECIFICATION

(11) **EP 4 079 389 B1**
(45) Date of publication and mention of the grant of the patent: **08.11.2023**
(21) Application number: 21173924.8
(22) Date of filing: 14.05.2021
(51) Int. Cl.: B01D 24/04, A47J 31/06, B01D 24/16, C02F 1/00, C02F 1/28, C02F 1/42

(54) **FILTER ELEMENT AND COFFEE MACHINE**
FILTERELEMENT AND KAFFEEMASCHINE
ÉLÉMENT DE FILTRE ET MACHINE À CAFÉ

(30) Priority: 19.04.2021 CN 202110419953
(43) Date of publication of application: 26.10.2022
(73) Proprietor: Tianjin Yunda Industry And Trade Co., Ltd., Tianjin 301600 (CN)
(72) Inventor: WEI, Enyu, Tianjin, 301600 (CN)
(74) Representative: Cabinet Chaillot

(56) References cited:
- WO-A1-2015/157680
- WO-A1-2019/038621
- WO-A2-2010/081075
- CN-A- 108 218 048
- GB-A- 2 522 219
- US-A1- 2008 277 327

## Description

### TECHNICAL FIELD

The present disclosure relates to the field of filtration technology, in particular to a staged filter element with a sealing assembly, and to a coffee machine including the filter element.

### BACKGROUND

At present, PP- (polypropylene) or PE- (polyethylene) sintered filter element is used as the end-stage filter element of the coffee machine. The internal filter material in the filter element is mixture of resin and activated carbon. Due to instability of the PP and PE filter element, the unstable porosity of the end-stage PP or PE filter element causes low water flow in the filter element, and the phenomenon of low water flow due to water flow through the filter element occur. Meanwhile, after long-time service of the filter element, the problems such as caking of filter material and compaction of the filter element are resulted, reducing the performance and efficiency of filter element in the coffee machine.

GB 2 522 219 A discloses a filter Insert for filtering a fluid, comprising: an elongate dosedended tube including a circumferential sealing rim; and a conduit for conveying fluid, one end of the conduit forming an inlet opening, the other end of the conduit being suitable for dispershig fluid into a filter medium located within the tube.

WO 2019/038621 A1 discloses a zone water-treatment cartridge for a water- treatment device, wherein the water-treatment device comprises a head comprising a port for feeding water for treatment to the zone water-treatment cartridge and a port for discharging water after treatment from the zone water-treatment cartridge, wherein the zone water-treatment cartridge comprises a first inlet channeland a second inlet channel for feeding water for treatment to the zone cartridge, configured to form a fluid communication with the port of the head for feeding water for treatment to the zone water-treatment cartridge and an outlet channel for discharging water after treatment from the zone cartridge configured to form a fluid communication with the port for discharging water after treatment from the zone water-treatment cartridge, a first water- treatment zone, which is in a fluid communication with the first inlet channel, a second water-treatment zone, which is in a fluid communication with the second inlet channel, the first water-treatment zone and the outlet channel, respectively, characterized in that it comprises orienting means configured to establish a flow of water for treatment from the port of the head for feeding water for treatment through at least one of the first inlet channel and the second inlet channel by rotation of the zone water-treatment cartridge in the head of the water- treatment device.

CN 108 218 048 A discloses a coffee machine filter element, comprising: an upper cover, a body, a filter cloth, a water outlet tweezers, an outlet pipe, an activated carbon, a resin, a sealing ring, a sealing valve, a time recording disk, and an upper cover on the upper side of the body, a time recording disk is mounted on the upper side of the upper cover, and the time plate is engraved with a time mark and a protrusion. The protrusion corresponds to a time mark, and a gland is mounted on the upper side of the time recording disk. The notch is a time scale range, and the upper side of the body is provided with an annular convex opening, the convex opening is coupled with the concave end of the upper cover, and is ultrasonically welded, the body and the upper part. The cover forms a sealed whole body, the upper side of the upper cover is provided with a sealing valve, the lower side of the upper cover is provided with a water outlet tweezers, and the water outlet tweezers are mounted on the upper side of the body, and the tapered cavity formed at the top of the internal body cavity. The body is combined with the side legs of the water outlet rafter, so that the effluent tweezers clamps the filter core cavity, the upper side of the effluent tweezers is fixed with a filter cloth, the middle part of the effluent tweezers has an annular grille, the annular grille and the body and the upper cover form an open after filtering chamber; a water outlet is opened on the lower side of the effluent tweezers, the water outlet is connected to the outlet pipe, the outlet pipe is installed on the inner side of the body, and a pre-filtration cavity is formed between the outlet pipe and the body, and the pre-filter cavity is filled an activated carbon and a resin are disposed, and a water inlet and a water outlet are opened on a lower side of the body, the water outlet is connected to an outlet pipe, the water inlet is connected to a pre-filtration chamber, and the water inlet is a grill structure, a ring protrusion is arranged on the lower side of the body, the ring protrusion is connected with a groove on the sealing ring, a sealing valve is arranged on the upper side of the upper cover, and a boss is arranged on the bottom of the body, and the outer contour of the boss is one week. The outlet pipe is connected, and the center of the top of the boss has a through hole at the center of the bottom of the body, and the through hole is used for the passage of the filtered water; the bottom of the water outlet has a boss at the bottom, and a through hole is formed in the center of the boss to the inside of the water outlet. The bottom through hole is connected to the outside of the water outlet tube at one time, and the outer edge of the upper part of the water outlet has reinforcing ribs, and the legs formed by the reinforcing ribs. The conical cavity formed by the body cavity is a effluent tweezers clamping the filter cavity, the middle part of the effluent tweezers has an annular grille, and the annular grille forms an open filtered cavity with the body and the upper cover, and the middle part of the scorpion. The annular grid gap is used to connect the filtered filter chamber to the pre-filtration chamber.

WO 2015/157680 A1 discloses a pure water system comprising: a tank having an inner surface; a cover assembly forming a fluid tight connection with the tank; and purification media disposed in a porous elastomeric filter bag, the filter bag being positioned in and sealingly engaging the inner surface of the tank.

### SUMMARY

In view of the problems existing in the prior arts, the present disclosure provides a staged filter element according to claim 1.

The filter element comprises a filter element body, a water inlet, a water outlet, an end cap, and the filter element further comprises a perforated partition in the filter element body, and the perforated partition is configured to divide the filter element body into at least two chambers, the at least two chambers include a first chamber and a second chamber, the first chamber is filled with an adsorption filter material, and the second chamber is filled with an ion exchange filter material;
wherein the filter element further comprises at least two sealing ribs arranged on the inner surface at the lower end of the filter element body and a sealing gasket contained in the cavity at the bottom of the filter element body; wherein the sealing gasket includes at least two sealing groove adapted to the sealing ribs; and
wherein the filter element further comprises a base for fixing the filter element, and the base comprises a base body, a water outlet hole, a clamping rib, and a protrusion; wherein the base body is provided with the water outlet hole at the center of the base body and the base body is provided with clamping ribs circumferentially distributed on the surface of the base body, and the clamping ribs are adapted to clamp to the lower end of the filter element body; the base body is provided with at least three protrusions on the surface of base body proximal to water outlet hole relative to the clamping rib, and the protrusions are configured to engage with the recesses of the sealing gasket,
characterized in that
the sealing gasket is adapted to contact the base body to form a sealing assembly, wherein the sealing gasket includes a columnar part and at least three bosses arranged circumferentially on the end surface of the columnar part, the columnar part is provided with a central hole allowing for water to pass through, a recess is provided between every two bosses, and the recess runs through diagonally or transversely between two adjacent bosses;
the base body is provided with a water outlet hole at the center of the base body, and the base body is adapted to closely contact to both the bosses and the recesses on the sealing gasket or the base body is adapted to closely contact to the end surface of the sealing gasket to achieve sealing between the sealing gasket and the base body.

In the present disclosure, the filter element is improved such that it has a staged filter element structure. In some embodiments of the present disclosure, the filter element is configured to a two-stage structure by arranging a perforated partition inside the filter element body through which water flow can pass. Since the filter element is divided into two stages, and the primary filter material (i.e. the adsorption filter material) and the softening filter material are filled separately, and functions of both filtration and descaling are realized, addressing the issues in the filter element in which PP/PE (polypropylene / polyethylene) are used as the end filter element of the coffee machine. The phenomenon that there is no water flowing out or there is reduced water flow is addressed. Meanwhile, the problem of low water flow in the filter element caused by the mixing of the filter material and the caking of the filter material is also solved. In addition, in the present disclosure, activated carbon and resin are separately filled on both sides of the perforated partition in the filter element to avoid filter material hardening caused by the mixing of two different filter materials. In addition, the water inlet, water outlet, and middle part of the filter element can be equipped with a perforated partition, which not only increases the water flow area of the water path in the filter element, but also avoids the low water output caused by uneven precision of PE and or PP sintered filter element.

In the present disclosure, the perforated partition may be any partitions that separate the filter material to avoid mixing of two filter materials, as long as it can separate the filter materials and allow water to pass through. For example, the perforated partition may be a filter cloth or a perforated grid. If the perforated partition is a filter cloth, the filter cloth can be configured in such a manner that the filter cloth is fixed by an annular ring in the center of the annular ring and the edge of the filter cloth can be integrally arranged with an annular ring; or two annular rings can be used to clamp the edge of the filter cloth to form a filter cloth assembly so that it can be arranged in the filter element body. In another embodiment, the perforated partition is a perforated grid. The perforated grid can be made of metal (for example, stainless steel), and the grid has holes of different shapes. The shape of the hole can be square, round, etc. An example of a perforated grid is a filter grid.

In this disclosure, the adsorption filter material may be a variety of adsorbents with active capabilities, for example, activated carbon. Adsorption filter material is mainly used to absorb residual chlorine in water and serves as the primary filtration of filter element. The ion exchange filter material can be a variety of filter materials having ion exchange ability, and it is used to remove metal ions in the water, soften the influent water, and serves as the secondary filtration of the filter element. For example, the ion exchange filter material is ion exchange resin.

In one embodiment of the present disclosure, the filter element further comprises a central pipe located inside the filter element body and extending in the longitudinal direction of the filter element body, the central pipe is configured to pass through the perforated partition, with one end of the central tube being connected to the water inlet where an inlet water filter mesh is provided, and the other end of the central pipe being connected to the water outlet where an outlet water filter mesh is provided;
the perforated partition surrounds the outer wall of the central pipe and extends to the inner wall of the filter element body so that the inlet water flows from the water inlet through the first chamber filled with the adsorption filter material and then through the second chamber filled with the ion exchange filter material, and flows through the outlet water filter mesh at the water outlet into the central pipe, then flows out at the other end of the central pipe.

In this embodiment, the inlet water flows in from the bottom of the filter element, enters the cavity of the filter element after preliminary filtration by the inlet water filter mesh, and flows through the filter material (for example, activated carbon and resin). After the inlet water is purified by the filter material, the water passes through the outlet water filter mesh and is discharged from the lower end of the central pipe. The inlet water filter mesh can be a flexible filter mesh or a rigid perforated grid, such as a filter grid. Some features of the filter mesh or perforated grid may be referred to the description in the above embodiment. The presence of the central pipe allows the water to flow in from the bottom, flow upward through the filter material, flow into the central pipe from the upper end of the central pipe, and then flow out from the lower end of the central pipe. In this arrangement, the water inlet and the water outlet are both located at the same side of the filter element, making the design of the filter element more compact and reducing the volume of the filter element.

It should be noted that in the present disclosure, there is no limitation to the order in which the first chamber and the second chamber are arranged. In other words, the first chamber may be located at the upper part of the filter element and filled with an adsorption filter material, and the second chamber may be located at the lower part of the filter element and filled with an ion exchange filter material. Alternatively, the second chamber may be located at the upper part of the filter element and filled with an ion exchange filter material, and the second chamber may be located at the lower part of the filter element and filled with an adsorption filter material.

In one embodiment of the present disclosure, the filter element further comprises at least two water inlet holes arranged at an end of the filter element, and the water inlet holes are spaced apart from each other by a water inlet rib. This arrangement allows the water to flow into the filter element from multiple directions at the bottom of the filter element. In on preferred embodiment, the filter element is provided with six water inlet holes at the end of the filter element. More preferably, the water inlet holes are circumferentially distributed.

For the filter element, a cylindrical shape is a preferred shape, and the cylindrical filter element matches the water inlet holes which are circumferentially distributed. The water entering the water inlet flows through the filter material in six directions, and flows out from the water outlet after being filtered and softened.

The sealing ribs on the inner surface at the lower end of the filter element body and the sealing gasket contained in the cavity at the bottom of the filter element body form a sealing assembly for sealing the filter element. In the sealing assembly, the sealing ribs and the sealing grooves are engaged closely with each other to form a sealing structure to prevent water from leaking from the cavity of filter element along the inner wall of the filter element body. In a preferred embodiment, the filter element body is provided with 6 sealing ribs on the inner surface at the bottom of the filter element body, and the sealing gasket is provided with six sealing grooves adapted to the sealing ribs. In one preferred embodiment, By using the combination of six sealing ribs and six sealing grooves, the filter element and the sealing gasket can be engaged more tightly, and reliable sealing can be realized. In another preferred embodiment, the sealing gasket includes a columnar part and at least three bosses arranged circumferentially on the end surface of the columnar part, and a recess is provided between every two bosses, and the recess runs through diagonally or transversely between two adjacent bosses.

In one embodiment of the present disclosure, the outlet water filter mesh comprises a tapered connection pipe protruding from the center of the outlet water filter mesh, and the tapered connection pipe is provided with a boss provided on the outer surface of the tapered connection pipe so that boss is sleeved into the central pipe to prevent the activated carbon from flowing out of the inlet of the filter element.

In another aspect not part of the claimed invention, the filter element body of the sealing assembly is provided with at least one slit distributed circumferentially in a cavity at the lower end of the filter element body;
the inner surface of the lower end of the filter element body is provided with at least two sealing ribs, and the cavity at the lower end of the filter element body is provided with a sealing gasket, and the sealing rubber gasket includes at least one sealing groove adapted to the at least two sealing ribs ;
wherein the sealing gasket includes a columnar part and at least three bosses arranged on an end surface of the columnar part, and a recess is provided between every two bosses that are distributed circumferentially, and the recess runs through diagonally or transversely between two adjacent bosses.

In one embodiment of the sealing assemble of the present disclosure, the end surface of the boss, which is away from the columnar part, and the surfaces of the recesses between every two adjacent bosses, are in close contact with the base body to form a sealed area. In this sealing arrangement, the sealing effect is achieved through close contact in the longitudinal direction between the base body and the surfaces of both the boss and the recesses on the gasket.

In one embodiment of the sealing assembly of the present disclosure, the end surface on the columnar part that carries the bosses is in close contact with the base body to form a sealed area. In this sealing arrangement, the sealing effect is achieved through the close contact between the base body and the end surface of the gasket body in the longitudinal direction.

In one embodiment of the sealing assembly of the present disclosure, the number of the bosses is six, and the number of the recesses is six.

In the sealing assembly of the present disclosure, the material constituting the gasket body may be rigid or elastic. In the case where the material of the gasket body is rigid, the sealing effect can be further realized by the elastic sealing pad. In the case where the material of the gasket body is elastic, a better sealing effect can be achieved due to the elastic nature of the material itself, without using an additional sealing pad.

In one embodiment of the sealing assembly of the present disclosure, the sealing gasket further includes at least two sealing grooves arranged on the side of the sealing gasket, and the sealing grooves are adapted to cooperate with at least two sealing ribs to achieve sealing. By using this arrangement, the sealing gasket can be jammed with at least two sealing ribs provided on the inner surface of the lower end of the filter element body, thereby further improving the sealing performance of the filter element. In a specific embodiment of the sealing assembly of the present disclosure, the number of the sealing grooves is six, and the number of the sealing ribs is six.

In one embodiment of the sealing assembly of the present disclosure, the base body is provided with clamping ribs circumferentially distributed on the surface of the base body, and the clamping ribs are adapted to clamp to the slits provided at the lower end of the filter element body. More preferably, the clamping rib is provided with at least three protrusions on the surface of base body proximal to water outlet hole relative to the clamping rib, and the protrusions are in close contact with the recesses of the sealing gasket, thereby realizing the sealing of the sealing assembly. In a specific embodiment of the sealing assembly of the present disclosure, the number of the protrusions is 6 so that protrusions are adapted to the 6 recesses on the gasket.

In yet another aspect, the present disclosure provides a coffee machine including the filter element described in the present disclosure.

### DETAILED DESCRIPTION OF THE DRAWINGS

FIG. 1 is a structural diagram of the filter element of the present disclosure;
FIG. 2 is a cross-sectional view of the filter element of the present disclosure;
FIG. 3 is a bottom view of the filter element of the present disclosure;
FIG. 4 is a top view of the sealing gasket in the filter element of the present disclosure;
FIG. 5 is a perspective view of the gasket of the filter element of the present disclosure;
FIG. 6 is a schematic diagram of the sealing area in one sealing arrangement of the sealing gasket;
FIG. 7 is a schematic diagram of the sealing area in another sealing arrangement of the sealing gasket;
FIG. 8 is a sectional view of the assembly of the sealing gasket and the bottom part of the filter element of the present disclosure;
FIG. 9 is a cross-sectional view of the connection between the filter element and the end cap of the present disclosure;
FIG. 10 is a structural diagram of the base of the filter element of the present disclosure;
FIG. 11 is a schematic diagram of assembly of the base of the filter element and the filter element of the present disclosure;
FIG. 12 is a cross-sectional view of the assembly of the base and the filter element of the present disclosure;
FIG. 13 is a schematic diagram of the water flow path when the filter element of the present disclosure is in use.

### DETAILED DESCRIPTION OF THE EMBODIMENTS

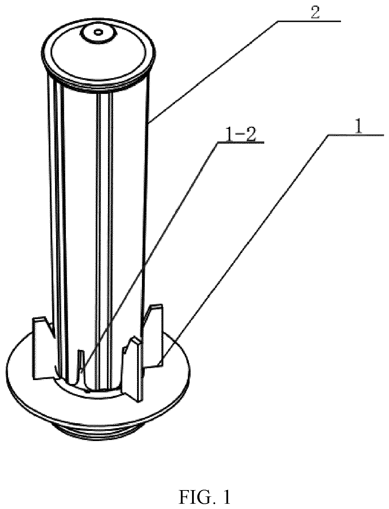

The present disclosure will be further described below in conjunction with the drawings and embodiments. In the present disclosure, the expression for the relative position, for example, "upper", "lower", "top", "bottom", "outer" directional terms "inner" and the like are merely for purpose of explanation and not intended to limit the scope of the present disclosure. In present disclosure, these orientation expressions are mainly based on the directions shown in FIG. 1.

As shown in FIG 1, a schematic view of the filter assembly of the present disclosure is shown. In FIG. 1, the filter element assembly includes a base 1, a filter element 2, a water inlet 1-2 and a water outlet (not shown), and an end cap 2-2.

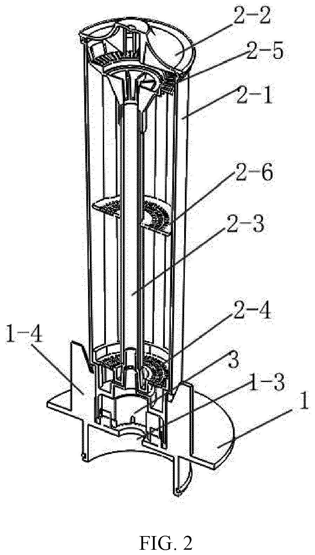

FIG. 2 is a cross-sectional view of the filter element of the present disclosure. In FIG. 2, the filter element 2 includes a filter element body 2-1, an end cap 2-2, a central pipe 2-3, a water inlet grid 2-4, a water outlet grid 2-5, and a partition grid 2-6. The end cap 2-2 is installed on the top of the filter element body 2-1, the water inlet grid 2-4 is installed on the bottom of the filter element body 2-1, and the central pipe 2-3 is arranged in cavity of the filter element body and extends longitudinally. In in the middle of the cavity of the filter element body, a partition grid 2-6 is installed. The partition grid 2-6 divides the filter element body into two chambers. The first chamber is located at the upper part of the filter element body and filled with resin, and the second chamber is located at the lower part and filled with activated carbon.

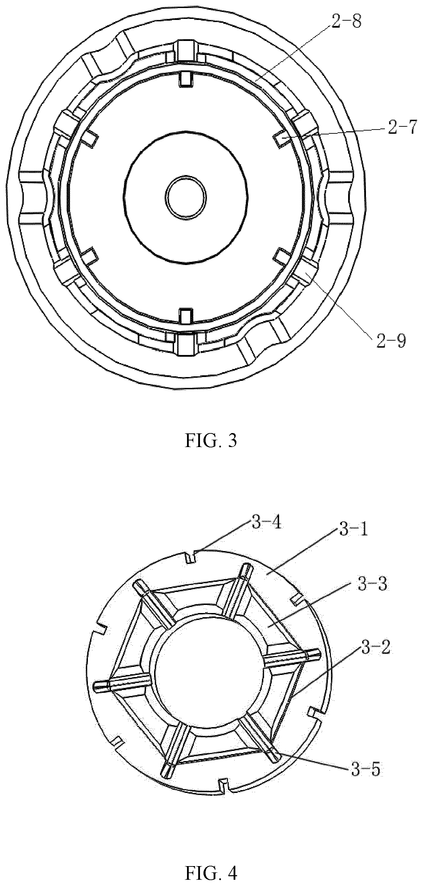

The central pipe 2-3 passes through the partition grid 2-6. One end of the central pipe 2-3 is connected to the water inlet grid 2-4 at the water inlet, and the other end is connected to the water outlet grid 2-5 provided at the water outlet. The partition grid 2-6 surrounds the outer wall of the central pipe and extends to the inner wall of the filter element body so that water enters from the six water inlet ribs 2-9 (shown in FIG. 3) which are located at the water inlet and spaced with each other and flows through the first chamber filled with adsorption filter material (activated carbon) and through the second chamber filled with ion exchange filter material (ion exchange resin). And water flows into the central pipe from the water outlet grid 2-5 at the water outlet, and then the water flows out from the other end of the central pipe.

In the present disclosure, the upper and lower sides of the partition grid 2-6 arranged in the filter element are separately filled with activated carbon and resin, avoiding clumping (caking) of filter material caused by the mixing of the filter materials. In addition, filter grids can be arranged at the water inlet, at the water outlet, and within the filter element, which not only increases the water passage area of the filter element, but also avoids reduction in water volume caused by the uneven precision of the PE and/or PP sintered filter material in the filter element.

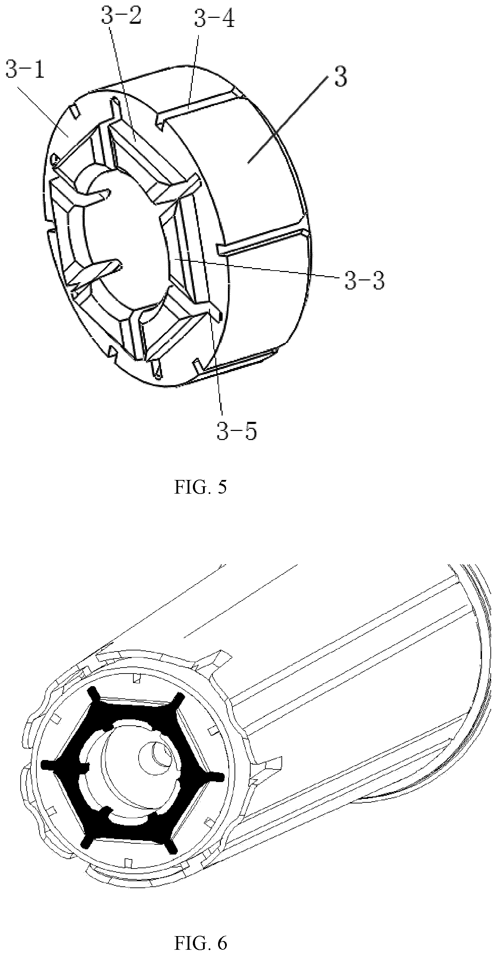

In order to ensure the sealing of the filter element, an elastic rubber sealing gasket 3 is provided at the bottom of the filter element. As shown in FIG. 4 and FIG. 5, the rubber sealing gasket 3 is composed of a rubber gasket body 3-1, a boss 3-2, a sealing groove 3-4 and a recess 3-5. The rubber gasket body 3-1 has a cylindrical structure, and the sealing groove 3-4 is opened on the side of the cylindrical rubber gasket body. As shown in FIG. 4, six sealing grooves 3-4 are provided, the sealing grooves are distributed in equal space along the circumference of the cylindrical rubber sealing gasket 3. The end surface of the rubber gasket body 3-1 can be adapted to form multiple sealing positions with the bosses 3-2. Correspondingly, there are six recesses 3-5 between adjacent sealing positions (between the bosses 3-2).

There are mainly two manners for sealing the bottom of the filter element in the present disclosure.

The first sealing manner is described as follows.

The end surfaces at top of the boss 3-3 of the six bosses 3-2 on the surface of the rubber sealing gasket 3 and the surfaces of the recesses 3-5 between every two adjacent bosses 3-2 form a sealed area. In other words, the sealing area is formed by the end surfaces at top of the boss 3-3 and the surface of the recess 3-5, and sealing is achieved by blocking the end surfaces at top of the boss 3-3 and the recess 3-5. The sealed area is shown as the black filled area in FIG. 6. It can be envisaged from FIG. 6 that the sealing between the filter element and the base is achieved through the contact between the surfaces of the two parts (i.e. the base and the rubber sealing gasket) in the longitudinal direction of the filter element.

The second sealing manner is described as follows.

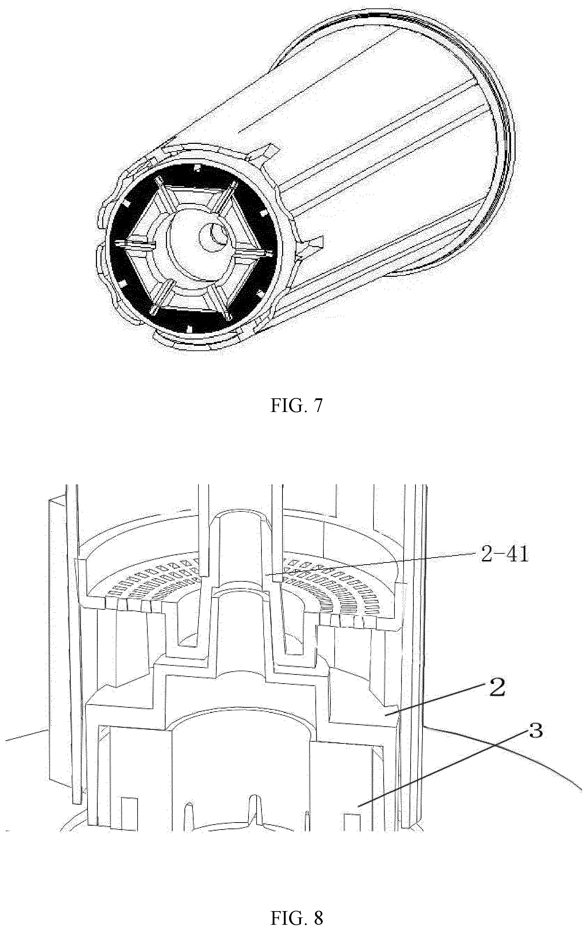

On the bearing surface of the rubber sealing gasket 3 where with the bossed 3-2 are provided, a sealing area is formed on the remaining area on the bearing surface when the areas occupied by the boss 3-2 and the recess 3-5 are excluded, and sealing is achieved by blocking the end surface of the rubber sealing gasket. The sealed area is shown as the black filled area in FIG. 7.

The rubber sealing gasket 3 is installed in such a manner that one end of the sealing rubber gasket 3 is installed in the cavity at the bottom of the filter element, and the sealing groove 3-4 of the sealing rubber gasket and the sealing ribs 2-7 on the inner surface in the cavity at the bottom of the filter element (see FIG. 3) are jammed tightly. The six bosses 3-2 and six recesses 3-5 on the other end of the rubber sealing gasket 3 cooperate with the base 1 to form a sealing structure.

In the two exemplary sealing manners mentioned above, both of the two sealing manners involve close contact of at least two surfaces in the longitudinal direction of the filter element. In addition, a hexagonal arrangement is formed between the six bosses 3-2. This hexagonal arrangement not only allows the filter element to be clamped more tightly, but also achieves better sealing performance.

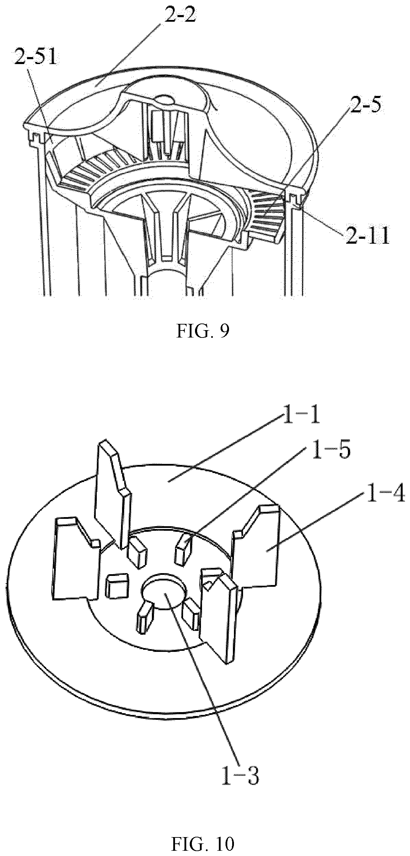

As shown in FIG. 9, the upper part of the filter element body 2-1 is provided with an annular male half-coupling 2-11 which is engaged with the female half-coupling of the end cap 2-2, and the male half-coupling and the female half-coupling are welded by ultrasound to form a sealing structure on the top of the filter element. The top of the inner cavity of the filter element body is coupled to the water outlet grid feet 2-51 so that the water outlet grid 2-5 is clamped in the cavity of the filter element body.

As shown in FIG. 10, the base 1 is composed of a base body 1-1, a water outlet 1-3, a clamping rib 1-4 and a protrusion 1-5. The water outlet 1-3 is arranged in the center of the base body 1-1 for receiving water from the central pipe 2-3. The upper surface of the base body 1-1 is provided with four clamping ribs 1-4 that are distributed circumferentially, and the clamping ribs 1-4 are clamped at the lower end of the filter element body 2-1. Six protrusions 1-5 are provided on the inner side of the clamping rib 1-4. The protrusions 1-5 and the rubber sealing gasket 3 are in close contact with each other to form the sealed area, and the sealed area are attached to the recesses 3-5 to realize the sealing of the rubber sealing gasket.

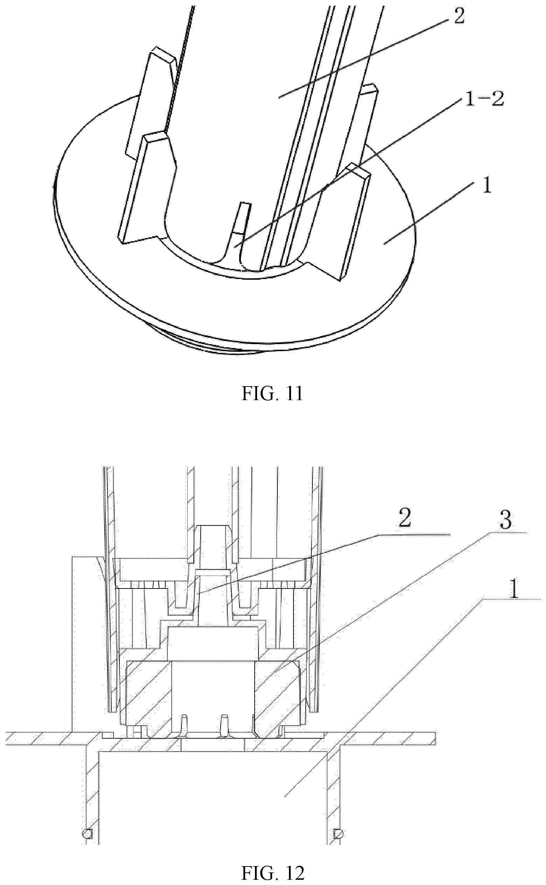

The structure of the base 1 and the filter body 2-1 after being clamped is shown in FIG. 11.

In this embodiment, the water inlet grid 2-4 is provided with a water inlet grid boss 2-41 at the center of the water inlet grid 2-4 (see FIG. 8). The boss for water inlet grid 2-41 are sleeved in the water outlet of the central pipe 2-3 to prevent the activated carbon from flowing out of the water inlet of the filter element.

In order to ensure the tightness between the filter element and the coffee machine, an annular groove is provided on the outer periphery of the lower end of the base (see FIG. 12), and the annular groove is used to accommodate an elastic O-ring. After the filter element of the present disclosure is installed on the coffee machine, the sealing between the filter element and the coffee machine is realized by the adhesion between the O-ring and the coffee machine, and the leakage of water from the filter element is prevented.

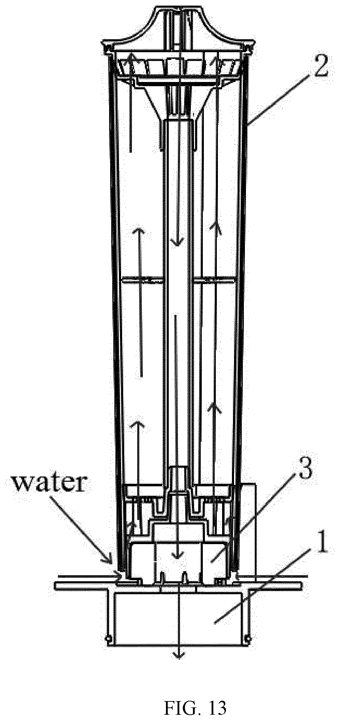

When using the filter element of the present disclosure, water that has been preliminarily filtered is introduced into the filter element from the water inlet on the lower end of the filter element, and the water enters the filter element through the water inlet at the bottom of the filter element, and is filtered through activated carbon and resin in sequence. The purified water after the filtration is discharged from the water outlet at the lower end of the central pipe, and finally enters the coffee machine through the central hole of the base. The flow path of the water is shown in FIG. 13.

In the present disclosure, the filter element body is divided into two chambers (the primary filter cavity and the secondary filter cavity of the filter element) by a partition grid. The two chambers realize filling of filter materials at two stages, preventing the filtering material from being mixed and causing caking due to long-term use of the filter material. At the same time, it also prevents small particles from clogging the resin gap and causing reduced water flow or even interruption of water flow. Using the filter element of the present disclosure can not only extend the service life of the filter element, but also improve work efficiency of the coffee machine the using the filter element of the present disclosure.

The present disclosure also provides a coffee machine comprising the filter element of the present disclosure. As for the cooperation between the filter element and the coffee machine, those skilled in the art have the ability to design according to the structure of the base, which will not be repeated herein.

### List of Reference signs:

1: base; 2: filter element; 3: sealing gasket;
1-1: base body; 1-2: water inlet; 1-3: water outlet; 1-4: clamping rib; 1-5: protrusion;
2-1: element body; 2-2: end cap; 2-3: central pipe; 2-4: water inlet grid; 2-41: boss for water inlet grid;
2-5: water outlet grid; 2-51: leg of water outlet grid;
2-6: partition grid; 2-7: sealing rib; 2-8 water inlet hole; 2-9: water inlet rib;
3-1: gasket body; 3-2: boss; 3-3: end surface at top of the boss; 3-4: sealing groove; 3-5: recess.

## Claims

1. A filter element (2), comprising a filter element body (2-1) having a cavity, a water inlet (1-2), a water outlet (1-3) and an end cap (2-2), wherein the filter element further comprises a perforated partition (2-6) within the filter element body, and the perforated partition is configured to divide the filter element body into at least two chambers, the at least two chambers include a first chamber and a second chamber, the first chamber is filled with an adsorption filter material, and the second chamber is filled with an ion exchange filter material;
wherein the filter element further comprises at least two sealing ribs arranged on the inner surface at the lower end of the filter element body and a sealing gasket (3) contained in the cavity at the bottom of the filter element body; wherein the sealing gasket includes at least two sealing grooves (3-4) adapted to the sealing ribs (2-7); and
wherein the filter element further comprises a base (1) for fixing the filter element, and the base comprises a base body (1-1), a water outlet hole, a clamping rib (1-4), and a protrusion (1-5); wherein the base body is provided with the water outlet hole at the center of the base body and the base body is provided with clamping ribs circumferentially distributed on the surface of the base body, and the clamping ribs are adapted to clamp the lower end of the filter element body; the base body is provided with at least three protrusions on the surface of base body proximal to water outlet hole relative to the clamping rib, and the protrusions are configured to engage with the recesses of the sealing gasket, and
**characterized in that**
the sealing gasket (3) is adapted to contact the base body (1-1) to form a sealing assembly, wherein the sealing gasket (3) includes a columnar part and at least three bosses arranged circumferentially on the end surface of the columnar part, the columnar part is provided with a central hole allowing water to pass through, a recess is provided between every two bosses, and the recess runs through diagonally or transversely between two adjacent bosses;
the base body (1-1) is provided with a water outlet hole at the center of the base body (1-1), and the base body (1-1) is adapted to closely contact both the bosses and the recesses on the sealing gasket (3), or the base body (1-1) is adapted to closely contact the end surface of the sealing gasket (3) to achieve sealing between the sealing gasket (3) and the base body (1-1).

2. The filter element according to claim 1, wherein the perforated partition (2-6) is selected from the group consisting of a filter cloth and a perforated grid.

3. The filter element according to claim 1 or 2, wherein the adsorption filter material is activated carbon and the ion exchange filter material is ion exchange resin.

4. The filter element according to claim 1 or 2, wherein the filter element further comprises a central pipe (2-3) located inside the filter element body and extending in the longitudinal direction of the filter element body, the central pipe is configured to pass through the perforated partition, with one end of the central tube being connected to the water inlet where an inlet water filter mesh is provided, and the other end of the central pipe being connected to the water outlet where an outlet water filter mesh is provided;
the perforated partition surrounds the outer wall of the central pipe and extends to the inner wall of the filter element body so that the inlet water from the water inlet flows through the first chamber filled with the adsorption filter material and then through the second chamber filled with the ion exchange filter material, and flows through the outlet water filter mesh at the water outlet into the central pipe, then flows out at the other end of the central pipe.

5. The filter element according to claim 1 or 2, wherein the filter element further comprises at least two water inlet holes (2-8) arranged at an end of the filter element, and the water inlet holes are spaced apart from each other by a water inlet rib (2-9).

6. The filter element according to claim 5, wherein the filter element is provided with six water inlet holes at the end of the filter element; and the water inlet holes are distributed circumferentially.

7. The filter element according to claim 1, wherein the filter element body is provided with six sealing ribs on the inner surface at the bottom of the filter element body, and the sealing gasket is provided with six sealing grooves adapted to the sealing ribs;
the sealing gasket includes a columnar part and at least three bosses arranged circumferentially on the end surface of the columnar part, and a recess (3-5) is provided between every two bosses (3-2), and the recess runs through diagonally or transversely between two adjacent bosses.

8. The filter element according to claim 4, wherein the outlet water filter mesh comprises a tapered connection pipe protruding from the center of the outlet water filter mesh, and the tapered connection pipe is provided with a boss provided on the outer surface of the tapered connection pipe to facilitate socketing of the boss to the water outlet of the central pipe.

9. The filter element according to claim 1, wherein the end surface (3-3) at top of the boss, which is away from the columnar part, and the surfaces of the recesses between every two adjacent bosses, are in close contact with the base body to form a sealed area; or
the end surface on the columnar part that carries the bosses is in close contact with the base body to form a sealed area.

10. The filter element according to claim 1, wherein the sealing gasket further includes at least two sealing grooves arranged on the side of the sealing gasket, and the sealing grooves are adapted to cooperate with at least two sealing ribs to achieve sealing; further preferably, the number of the sealing grooves is 6, and the number of the sealing ribs is 6.

11. The filter element according to claim 1, wherein the base body is provided with clamping ribs circumferentially distributed on one surface of the base body, and the clamping ribs are adapted to clamp to the slits provided at the lower end of the filter element body; more preferably, the clamping rib is provided with at least three protrusions on the surface of base body proximal to water outlet hole relative to the clamping rib, and the protrusions are in close contact with the recesses of the sealing gasket.

12. A coffee machine, comprising the filter element according to any one of claims 1 to 11.

## Patentansprüche

1. - Filterelement (2), umfassend einen Filterelementkörper (2-1), der einen Hohlraum, einen Wassereinlass (1-2), einen Wasserauslass (1-3) und eine Endkappe (2-2) aufweist, wobei das Filterelement ferner eine perforierte Trennwand (2-6) innerhalb des Filterelementkörpers umfasst und die perforierte Trennwand konfiguriert ist, um den Filterelementkörper in mindestens zwei Kammern zu unterteilen, wobei die mindestens zwei Kammern eine erste Kammer und eine zweite Kammer beinhalten, die erste Kammer mit einem Adsorptionsfiltermaterial gefüllt ist und die zweite Kammer mit einem Ionenaustauschfiltermaterial gefüllt ist;
wobei das Filterelement ferner mindestens zwei Dichtungsrippen, die an der Innenfläche an dem unteren Ende des Filterelementkörpers angeordnet sind, und eine Dichtung (3) umfasst, die in dem Hohlraum an dem Boden des Filterelementkörpers enthalten ist; wobei die Dichtung mindestens zwei Dichtungsnuten (3-4) beinhaltet, die an die Dichtungsrippen (2-7) angepasst sind; und
wobei das Filterelement ferner eine Basis (1) zum Befestigen des Filterelements umfasst, und die Basis einen Basiskörper (1-1), ein Wasserauslassloch, eine Einspannrippe (1-4) und einen Vorsprung (1-5) umfasst; wobei der Basiskörper mit dem Wasserauslassloch in der Mitte des Basiskörpers versehen ist und der Basiskörper mit Einspannrippen versehen ist, die in Umfangsrichtung auf der Oberfläche des Basiskörpers verteilt sind, und die Einspannrippen angepasst sind, um das untere Ende des Filterelementkörpers einzuspannen; der Basiskörper mit mindestens drei Vorsprüngen auf der Oberfläche des Basiskörpers proximal zur Wasserauslassöffnung in Bezug auf die Einspannrippe versehen ist, und die Vorsprünge konfiguriert sind, um die Aussparungen der Dichtung einzugreifen, und
**dadurch gekennzeichnet, dass**
die Dichtung (3) angepasst ist, um den Basiskörper (1-1) zu berühren, um eine Dichtungsanordnung zu bilden, wobei die Dichtung (3) ein säulenförmiges Teil und mindestens drei Vorsprünge beinhaltet, die in Umfangsrichtung an der Endfläche des säulenförmigen Teils angeordnet sind, das säulenförmige Teil mit einem mittleren Loch versehen ist, das ein Durchlaufen von Wasser ermöglicht, wobei eine Aussparung zwischen jeweils zwei Vorsprüngen bereitgestellt ist und die Aussparung diagonal oder quer zwischen zwei benachbarten Vorsprüngen verläuft;
der Basiskörper (1-1) mit einem Wasserauslassloch in der Mitte des Basiskörpers (1-1) versehen ist, und der Basiskörper (1-1) angepasst ist, um sowohl die Vorsprünge als auch die Aussparungen an der Dichtung (3) eng zu berühren, oder der Basiskörper (1-1) angepasst ist, um die Endfläche der Dichtung (3) eng zu berühren, um eine Abdichtung zwischen der Dichtung (3) und dem Basiskörper (1-1) zu erreichen.

2. - Filterelement nach Anspruch 1, wobei die perforierte Trennwand (2-6) ausgewählt ist aus der Gruppe, bestehend aus einem Filtertuch und einem perforierten Gitter.

3. - Filterelement nach Anspruch 1 oder 2, wobei das Adsorptionsfiltermaterial Aktivkohle und das Ionenaustauschfiltermaterial ein Ionenaustauschharz ist.

4. - Filterelement nach Anspruch 1 oder 2, wobei das Filterelement ferner ein mittleres Rohr (2-3) umfasst, das sich im Inneren des Filterelementkörpers befindet und sich in Längsrichtung des Filterelementkörpers erstreckt, wobei das mittlere Rohr konfiguriert ist, um durch die perforierte Trennwand zu verlaufen, wobei ein Ende des mittleren Rohrs mit dem Wassereinlass verbunden ist, wo ein Einlasswasserfiltersieb bereitgestellt ist, und das andere Ende des mittleren Rohrs mit dem Wasserauslass verbunden ist, wo ein Auslasswasserfiltersieb bereitgestellt ist;
die perforierte Trennwand die Außenwand des mittleren Rohrs umgibt und sich bis zu der Innenwand des Filterelementkörpers erstreckt, sodass das einströmende Wasser von dem Wassereinlass durch die erste Kammer, die mit dem Adsorptionsfiltermaterial gefüllt ist, und dann durch die zweite Kammer, die mit dem Ionenaustauschfiltermaterial gefüllt ist, fließt und durch das Auslasswasserfiltersieb an dem Wasserauslass in das mittlere Rohr fließt und dann an dem anderen Ende des mittleren Rohrs ausströmt.

5. - Filterelement nach Anspruch 1 oder 2, wobei das Filterelement ferner mindestens zwei Wassereinlasslöcher (2-8) umfasst, die an einem Ende des Filterelements angeordnet sind, und die Wassereinlasslöcher durch eine Wassereinlassrippe (2-9) voneinander beabstandet sind.

6. - Filterelement nach Anspruch 5, wobei das Filterelement mit sechs Wassereinlasslöchern an dem Ende des Filterelements versehen ist und die Wassereinlasslöcher in Umfangsrichtung verteilt sind.

7. - Filterelement nach Anspruch 1, wobei der Filterelementkörper mit sechs Dichtungsrippen auf der Innenfläche an der Unterseite des Filterelementkörpers versehen ist und die Dichtung mit sechs Dichtungsnuten versehen ist, die an die Dichtungsrippen angepasst sind;
die Dichtung einen säulenförmigen Teil und mindestens drei in Umfangsrichtung an der Endfläche des säulenförmigen Teils angeordnete Vorsprünge beinhaltet und zwischen jeweils zwei Vorsprüngen (3-2) eine Aussparung (3-5) bereitgestellt ist und die Aussparung diagonal oder quer zwischen zwei benachbarten Vorsprüngen verläuft.

8. - Filterelement nach Anspruch 4, wobei das Auslasswasserfiltersieb ein sich verjüngendes Verbindungsrohr umfasst, das aus der Mitte des Auslasswasserfiltersiebs hervorsteht, und das sich verjüngende Verbindungsrohr mit einem Vorsprung versehen ist, der an der Außenfläche des sich verjüngenden Verbindungsrohrs bereitgestellt ist, um ein Anschließen des Vorsprungs an den Wasserauslass des mittleren Rohrs zu ermöglichen.

9. - Filterelement nach Anspruch 1, wobei die Endfläche (3-3) an der Oberseite des Vorsprungs, die von dem säulenförmigen Teil entfernt ist, und die Oberflächen der Aussparungen zwischen jeweils zwei benachbarten Vorsprüngen in engem Kontakt mit dem Basiskörper sind, um einen abgedichteten Bereich zu bilden; oder
die Endfläche des säulenförmigen Teils, der die Vorsprünge trägt, in engem Kontakt mit dem Basiskörper ist, um einen abgedichteten Bereich zu bilden.

10. - Filterelement nach Anspruch 1, wobei die Dichtung ferner mindestens zwei Dichtungsnuten aufweist, die auf der Seite der Dichtung angeordnet sind, und die Dichtungsnuten angepasst sind, um mit mindestens zwei Dichtungsrippen zusammenwirken, um eine Abdichtung zu erreichen; wobei ferner vorzugsweise die Anzahl der Dichtungsnuten 6 ist und die Anzahl der Dichtungsrippen 6 ist.

11. - Filterelement nach Anspruch 1, wobei der Basiskörper mit Einspannrippen versehen ist, die in Umfangsrichtung auf einer Oberfläche des Basiskörpers verteilt sind, und die Einspannrippen angepasst sind, um an den Schlitzen eingespannt zu werden, die an dem unteren Ende des Filterelementkörpers bereitgestellt sind; wobei ferner vorzugsweise die Einspannrippe mit mindestens drei Vorsprüngen auf der Oberfläche des Basiskörpers in der Nähe der Wasserauslassöffnung in Bezug auf die Einspannrippe versehen ist, und die Vorsprünge in engem Kontakt mit den Aussparungen der Dichtung sind.

12. - Kaffeemaschine, umfassend das Filterelement nach einem der Ansprüche 1 bis 11.

## Revendications

1. - Élément filtre (2), comprenant un corps d'élément filtre (2-1) ayant une cavité, une entrée d'eau (1-2), une sortie d'eau (1-3) et un bouchon d'extrémité (2-2), l'élément filtre comprenant en outre une cloison perforée (2-6) à l'intérieur du corps d'élément filtre, et la cloison perforée étant configurée pour diviser le corps d'élément filtre en au moins deux chambres, les au moins deux chambres comprenant une première chambre et une seconde chambre, la première chambre étant remplie d'un matériau filtrant d'adsorption, et la seconde chambre étant remplie d'un matériau filtrant échangeur d'ions ;
l'élément filtre comprenant en outre au moins deux nervures d'étanchéité disposées sur la surface intérieure à l'extrémité inférieure du corps d'élément filtre et un joint d'étanchéité (3) contenu dans la cavité à la partie inférieure du corps d'élément filtre ; le joint d'étanchéité comprenant au moins deux rainures d'étanchéité (3-4) adaptées aux nervures d'étanchéité (2-7) ; et
l'élément filtre comprenant en outre une base (1) pour fixer l'élément filtre, et la base comprenant un corps de base (1-1), un trou de sortie d'eau, une nervure de serrage (1-4) et une saillie (1-5) ; le corps de base comportant le trou de sortie d'eau au centre du corps de base et le corps de base comportant des nervures de serrage réparties de manière circonférentielle sur la surface du corps de base, et les nervures de serrage étant agencées pour serrer l'extrémité inférieure du corps d'élément filtre ; le corps de base comportant au moins trois saillies sur la surface du corps de base à proximité du trou de sortie d'eau par rapport à la nervure de serrage, et les saillies étant configurées pour s'engager avec les évidements du joint d'étanchéité, et
**caractérisé par le fait que**
le joint d'étanchéité (3) est agencé pour entrer en contact avec le corps de base (1-1) de façon à former un ensemble étanche, le joint d'étanchéité (3) comprenant une partie en colonne et au moins trois bossages répartis de manière circonférentielle sur la surface d'extrémité de la partie en colonne, la partie en colonne comportant un trou central permettant le passage d'eau à travers celui-ci, un évidement est prévu entre n'importe quels deux bossages, et l'évidement s'étendant en diagonale ou transversalement entre deux bossages adjacents ;
le corps de base (1-1) comporte un trou de sortie d'eau au centre du corps de base (1-1), et le corps de base (1-1) est agencé pour entrer en contact étroit avec à la fois les bossages et les évidements sur le joint d'étanchéité (3), ou le corps de base (1-1) est agencé pour entrer en contact étroit avec la surface d'extrémité du joint d'étanchéité (3) pour assurer l'étanchéité entre le joint d'étanchéité (3) et le corps de base (1-1).

2. - Élément filtre selon la revendication 1, dans lequel la cloison perforée (2-6) est choisie parmi le groupe constitué d'un tissu filtrant et d'une grille perforée.

3. - Élément filtre selon la revendication 1 ou 2, dans lequel le matériau filtrant d'adsorption est du charbon actif et le matériau filtrant d'échange d'ions est une résine échangeuse d'ions.

4. - Élément filtre selon la revendication 1 ou 2, l'élément filtre comprenant en outre un tube central (2-3) situé à l'intérieur du corps d'élément filtre et s'étendant dans la direction longitudinale du corps d'élément filtre, le tube central est configuré pour passer à travers la cloison perforée, avec une extrémité du tube central reliée à l'entrée d'eau où une maille filtrante d'eau d'entrée est disposée, et l'autre extrémité du tube central reliée à la sortie d'eau où une maille filtrante d'eau de sortie est disposée ;
la cloison perforée entoure la paroi extérieure du tube central et s'étend jusqu'à la paroi intérieure du corps d'élément filtre, de telle sorte que l'eau d'entrée provenant de l'entrée d'eau s'écoule à travers la première chambre remplie du matériau filtrant d'adsorption, puis à travers la seconde chambre remplie du matériau filtrant échangeur d'ions, et s'écoule à travers la maille filtrante d'eau de sortie au niveau de la sortie d'eau jusqu'au tube central, puis s'écoule en sortie à l'autre extrémité du tube central.

5. - Élément filtre selon la revendication 1 ou 2, l'élément filtre comprenant en outre au moins deux trous d'entrée d'eau (2-8) disposés à une extrémité de l'élément filtre et les trous d'entrée d'eau étant espacés l'un de l'autre par une nervure d'entrée d'eau (2-9).

6. - Élément filtre selon la revendication 5, l'élément filtre comportant six trous d'entrée d'eau à l'extrémité de l'élément filtre ; et les trous d'entrée d'eau étant répartis de manière circonférentielle.

7. - Élément filtre selon la revendication 1, dans lequel le corps d'élément filtre comporte six nervures d'étanchéité sur la surface intérieure à la partie inférieure du corps d'élément filtre, et le joint d'étanchéité comporte six rainures d'étanchéité adaptées aux nervures d'étanchéité ;
le joint d'étanchéité comprend une partie en colonne et au moins trois bossages répartis de manière circonférentielle sur la surface d'extrémité de la partie en colonne, et un évidement (3-5) est prévu entre deux bossages (3-2), et l'évidement s'étend en diagonale ou transversalement entre deux bossages adjacents.

8. - Élément filtre selon la revendication 4, dans lequel la maille filtrante d'eau de sortie comprend un tube de raccordement effilé faisant saillie à partir du centre de la maille filtrante d'eau de sortie, et le tube de raccordement effilé comprend un bossage prévu sur la surface extérieure du tube de raccordement effilé pour faciliter l'emboîtement du bossage à la sortie d'eau du tube central.

9. - Élément filtre selon la revendication 1, dans lequel la surface d'extrémité (3-3) au sommet du bossage, qui est à distance de la partie en colonne, et les surfaces des évidements entre n'importe quels deux bossages adjacents sont en contact étroit avec le corps de base pour former une zone étanche ; ou
la surface d'extrémité sur la partie en colonne qui porte les bossages est en contact étroit avec le corps de base pour former une zone étanche.

10. - Élément filtre selon la revendication 1, dans lequel le joint d'étanchéité comprend en outre au moins deux rainures d'étanchéité disposées sur le côté du joint d'étanchéité, et les rainures d'étanchéité sont agencées pour coopérer avec au moins deux nervures d'étanchéité pour assurer l'étanchéité ; en outre, de préférence, le nombre des rainures d'étanchéité est de 6 et le nombre des nervures d'étanchéité est de 6.

11. - Élément filtre selon la revendication 1, dans lequel le corps de base comporte des nervures de serrage réparties de manière circonférentielle sur une surface du corps de base, et les nervures de serrage sont agencées pour se fixer par serrage aux fentes prévues à l'extrémité inférieure du corps d'élément filtre ; de façon davantage préférée, la nervure de serrage comporte au moins trois saillies sur la surface du corps de base à proximité du trou de sortie d'eau par rapport à la nervure de serrage, et les saillies sont en contact étroit avec les évidements du joint d'étanchéité.

12. - Machine à café comprenant l'élément filtre selon l'une quelconque des revendications 1 à 11.
